# EUROPÄISCHE PATENTSCHRIFT

(11) **EP 1 277 601 B1**
(45) Veröffentlichungstag und Bekanntmachung des Hinweises auf die Patenterteilung: **10.01.2007**
(21) Anmeldenummer: 02015232.8
(22) Anmeldetag: 09.07.2002
(51) Int. Cl.: B60C 23/04

(54) **Vorrichtung zum Messen des Reifendruckes in einem Luftreifen eines Fahrzeuges**
Device for measuring the tyre pressure in a tyre of a vehicle
Dispositif pour mesurer la pression dans un pneumatique d'un véhicule

(30) Priorität: 19.07.2001 DE 20111704 U; 05.12.2001 DE 10159725
(43) Veröffentlichungstag der Anmeldung: 22.01.2003
(73) Patentinhaber: Alligator Ventilfabrik GmbH, D-89526 Giengen (DE)
(72) Erfinder: Gabelmann, Volker, 89168 Niederstotzingen (DE)
(74) Vertreter: Hiebsch, Gerhard F.

(56) Entgegenhaltungen:
- DE-U- 29 623 466
- US-A- 5 844 131

## Beschreibung

Die Erfindung betrifft eine Vorrichtung zum Messen des Reifendruckes in einem Luftreifen eines Fahrzeuges mittels eines vom Reifendruck beaufschlagten Messwertgebers am Felgenbett einer ein Reifenventil aufnehmenden Felge für den Luftreifen, außerhalb dessen dem Messwertgeber ein Empfänger zugeordnet ist, wobei mit dem eine Überwurfmutter aufweisenden Reifenventil ein jenem Felgenbett zugeordnetes Elektronik- oder Signalgehäuse verbunden ist, welches Sockelleisten aufweist sowie eine Senderelektronik als Messwertgeber für den Reifendruck; das Signalgehäuse ist an das Reifenventil durch eine in die Ventilbohrung eingreifende Hohlschraube angeschlossen sowie diesem gegenüber einstellbar.

Die DE 37 34 053 A1 der Anmelderin beschreibt eine Vorrichtung zum Messen des Reifendruckes in einem Luftreifen eines Fahrzeuges; im Luftreifen ist ein Faltenbalg in etwa achsparalleler Bewegungsrichtung angeordnet und mit einem in Abhängigkeit vom Reifendruck an der Reifenaußenseite achsparallel verschiebbaren Dauermagneten verbunden, der bei Abweichungen vom normalen Reifendruck seine meßbare Lage verändert. Als stationärer Aufnehmer außerhalb des Luftreifens wird ein elektronisches Bauelement vorgeschlagen, welches dank des sog. Halleffektes jeweils senkrecht zu einem fließenden Strom und einem Magnetfeld eine Spannung erzeugt. Der erwähnte Halleffekt geht davon aus, daß in elektrischen Leitern, die sich in einem homogenen Magnetfeld befinden und in denen dazu senkrecht ein elektrischer Strom fließt, senkrecht zum Magnetfeld sowie senkrecht zum Strom eine Spannungsdifferenz entsteht. Die Größe dieses Effektes ist vom Leitermaterial abhängig und durch die jeweilige Hallkonstante gekennzeichnet.

Die Praxis hat nun ergeben, daß bei dem um die Radachse rotierenden Meßwertgeber infolge von -- durch die auftretende Fliehkraft hervorgerufenen -- Reibungskräften zwischen dem Faltenbalg bzw. dem Halter des Dauermagneten einerseits sowie dem Druckrohr anderseits die zum Messen erforderliche axiale Bewegung des Dauermagneten gestört werden kann - es tritt eine Hysterese auf. Durch letztere wird die Erfüllung der Forderung eines linearen drehzahlunabhängigen Zusammenhanges zwischen dem Reifendruck und der Bewegung des Meßwertgebers behindert.

Um nun das Anbringen des Meßwertgebers im Bereich der Felge zu vereinfachen sowie dessen Betriebssicherheit auch beim Wechseln des Fahrzeugreifens zu gewährleisten, wird mit der DE 296 23 466 U1 der Anmelderin eine gattungsgemäße Vorrichtung vorgeschlagen. Diese wird dem Fahrzeug herstellbar in Teilen geliefert und von diesem bei der Montage zusammengesetzt.

In Kenntnis dieses Standes der Technik ist Aufgabe der Erfindung, in Weiterentwicklung der Radmodule eine Modifizierung des Systems zur Montageerleichterung anzubieten.

Zur Lösung dieser Aufgabe führt die Lehre des unabhängigen Anspruches; die Unteransprüche geben günstige Weiterbildungen an.

Erfindungsgemäß ist an der Innenseite bzw. im Innenraum der Überwurfmutter ein Vorsprung als Sollbruchelement angebracht; dieser kann als -- gegebenenfalls gesondertesEinbauteil der Innenfläche der Überwurfmutter zugeordnet sein und ist bevorzugt als an der Innenfläche der Überwurfmutter umlaufender Steg ausgebildet. Zudem werden die Sockelleisten des Signalgehäuses durch die Hohlschraube an das Felgenbett gedrückt.

Nach einem weiteren Merkmal der Erfindung wird die Flächenpressung zwischen Schraubenkopf und Elektronikgehäuse so gewählt, dass bei Betätigung der Überwurfmutter das Drehmoment soweit ansteigt, dass jener innenliegende Steg bei Überschreitung eines bestimmten Drehmoments -- zwischen etwa 3 Nm und 6 Nm -- vom Bolzengewinde abgeschert wird. Vorteilhafterweise wird das Drehmoment so gewählt, dass vor dem Abscheren durch Drehen des Ventils ein Festziehen der Hohlschraube erfolgt.

Zudem hat es sich als günstig erwiesen, den Schraubenkopf formschlüssig im Signal- oder Elektronikgehäuse gegen Verdrehen zu halten; hierzu weist der Schraubenkopf zumindest teilweise einen polygonalen Umfang auf, der sich mit Flächenteilen formschlüssig an das Innere des Signalgehäuses anschmiegt.

Der Ventilkörper und die Elektronikeinheit sind im Anlieferzustand beim Abnehmer locker beweglich mit einer Schraube vormontiert. Überwurfmutter und Ventilkappe werden getrennt geliefert - alternativ läßt sich die Überwurfmutter mit einer aufgeschraubten schlankeren Ventilkappe mon tieren. Zur Befestigung der Einheit wird der Ventilkörper durch das Felgenloch gesteckt und die Überwurfmutter bis zur Anlage an die Felge festgeschraubt. Für den Montagevorgang wird dadurch eine wesentliche Vereinfachung gegebenüber heutigen Verfahren erzielt.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1:: einen Teilquerschnitt durch eine Felge für einen Fahrzeugreifen mit Reifenventil und einem daran festliegenden Signalgehäuse;
- Fig. 2:: die teilweise geschnittene Rückenansicht des Signalgehäuses;
- Fig. 3:: einen Längsschnitt gemäß Linie III-III in Fig. 2 durch das Signalgehäuse;
- Fig. 4:: das Signalgehäuse mit Reifenventil in teilweise geschnittener Seitenansicht;
- Fig. 5:: die Frontansicht eines Teiles im Signalgehäuse.

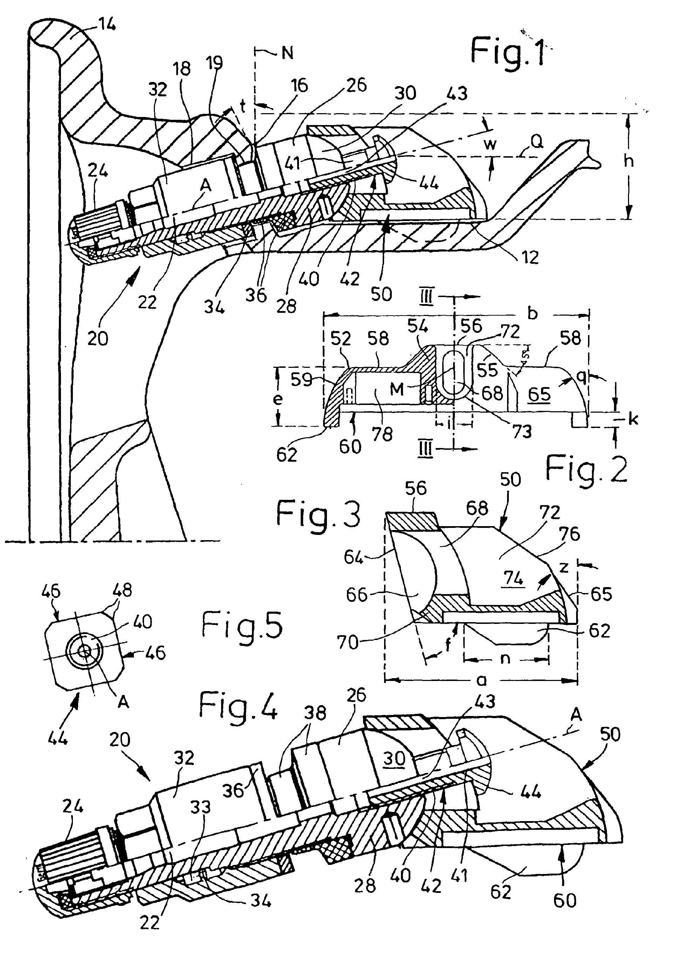

Fig. 1 lässt einen Teil einer aus einer Aluminiumlegierung druckgegossenen Felge 10 für ein nicht dargestelltes Kraftfahrzeugrad erkennen mit einem -- über ein Felgenbett 12 aufragenden -- Felgenhorn 14. In die äußere Seitenwange 16 des Felgenbettes 12 ist ein Ventilloch 18 für ein Reifenventil 20 so eingeformt, dass dessen Längsachse A in einem Neigungswinkel w von 25° zu einer Parallelen Q der Radachse verläuft. Die Höhe h jener Seitenwange 16 kann ebenso unterschiedlich bemessen sein wie der Neigungswinkel w, dem der Wangenwinkel t zur Achsennormalen N entspricht. Dieser misst hier ebenfalls etwa 25°.

Das Reifenventil 20 weist in einem Ventilkörper 22 aus einer beschichteten -- beispielsweise eloxierten -- Aluminiumlegierung einen nicht erkennbaren Ventileinsatz mit axialer Ventilbohrung auf, den eine Ventilkappe 24 überspannt. Der Ventilkörper 22 ist mit einer nicht deutlich erkennbaren axialen Bohrung ausgestattet sowie an dem der Ventilkappe 24 fernen Ende -- dem Ventilfuß 26 -- mit einem radial abragenden Kragen 28, der in eine kuppelartig sphärische Endfläche 30 übergeht. Zwischen dem Kragen 28 und einer -- sich an einer Überwurfmutter 32 abstützenden-- Scheibe 36 schmiegt sich die Kante 19 des Ventillochs 18 der Seitenwange 16 einem querschnittlich gestuften elastischen Ring 38 an. Jene Überwurfmutter 32 ist an ihrer Innenseite 33 mit einer umlaufend angeformten Rippe 34 ausgestattet, die beim Aufschrauben auf das Reifenventil 20 ab einer bestimmbaren Stellung auf den Gewindebeginn des Reifenventils 20 aufläuft und so ein Drehmoment erzeugt, welches das gesamte Reifenventil 20 dreht.

In jene axiale Bohrung des Ventilkörpers 22 ist der mit Außengewinde 40 ausgestattete Schaft 41 einer Hohlschraube 42 eingeschraubt, die einen -- den axialen Hohlraum 43 des Schraubenschaftes 41 verlängernden Schraubenkopf 44 polygonen Umfanges aufweist; dessen -- gegebenenfalls teilweise gekrümmte -- Seitenflächen 46 bilden Ecken 48 und stützen sich -- unter Bildung eines Formschlusses -- abschnittsweise flächig an Gegenflächen ab. Der formschlüssige Sitz der Hohlschraube 42 bewirkt, dass diese in das Reifenventil 20 geschraubt wird, wenn dieses - wie oben geschildert - dank des beim Auflaufen der umlaufenden Rippe 33 erzeugten Drehmomentes gedreht wird. Sobald der Schraubkopf 44 dieser Hohlschraube 42 eine genügend große Flächenpressung an dem Signalgehäuse 50 ausübt, steigt das Drehmoment der Überwurfmutter 32, die Rippe 33 wird abgeschert und die Überwurfmutter 32 kann bis zur Anlage an der Felge 10 für den weiteren Montageprozess betätigt werden.

Die erwähnten Gegenflächen für die Seitenflächen 46 und Ecken 48 des Schraubenkopfes 44 werden im übrigen angeboten von einem Elektronik- oder Signalgehäuse 50, das der Schraubenkopf 44 gegen den Ventilkragen 28 drückt.

Das Signalgehäuse 50 ist aus einem formstabilen leichten Kunststoff geformt und besteht aus einem nahezu quaderförmigen Sockelteil 52 -- einer größten Länge a von etwas mehr als 30 mm, einer Gesamtbreite b von etwa 60 mm und einer Sockelhöhe e von 10 mm -- sowie einer an der Mittellinie M des Sockelteils 52 aufragenden Anformung 54. Letztere weist zueinander geneigte Flankenflächen 55 sowie dazwischen eine Kopffläche 56 auf, die parallel zu Schulterflächen 58 des Sockelteils 52 und zu dessen Bodenfläche 60 verläuft. Von dieser stehen -- in Verlängerung von zwei Schmalseiten oder Stirnflächen 59 des Sockelteils 52 -- kielartige Sockel- oder Fußleisten 62 ab. Die Höhe k der Fußleisten 62 beträgt etwa 4 mm bei einer Leistenlänge n von 15 mm.

In der in Fig. 1 skizzierten Einbaustellung ruhen die Fußleisten 62 auf dem Felgenbett 12. Die Stirnflächen 59 sind in einem Winkel q von etwa 35° zur Vertikalen nach oben und innen gekrümmt geneigt, der Neigungswinkel z der Frontfläche 65 misst etwa 40°.

Die in jener Einbaustellung der Seitenwange 16 der Felge 10 zugewandte Längswand als Rückenfläche 64 des Signalgehäuses 50 ist zur Bodenfläche 60 in einem Winkel f von hier etwa 75° geneigt. An ihr ist in die Gehäuseanformung 54 eine Kaverne 66 etwa kalottenartiger Form eingebracht, von der ein -- parallel zur Vertikalen gerichtetes -- Langloch 68 ausgeht, das in einer parallel zur geneigten Rückenfläche 64 verlaufenden -- querschnittlich leicht gekrümmtenQuerwand 70 der Gehäuseanformung 54 angeordnet ist.

Die Querwand 70 trennt jene Kaverne 66 von einer in der Gehäuseanformung 54 mittig vorgesehenen Scheitelnut 72 der Nutbreite i von hier 8 mm, deren -- einen gerundeten Nutengrund 73 flankierende -- Nutwände 74 parallel zur Mittellinie M des Signalgehäuses 50 gerichtet sind. Die Nutwände 74 enden an Schrägflächen 76 der Gehäuseanformung 54; diese Schrägflächen 76 -- deren Neigungswinkel 45° beträgt -- gehen in die andere Längswand, die Frontfläche 65 des Signalgehäuses 50, über.

Beidseits der Scheitelnut 72 ist im Sockelteil 52 -- von der Bodenfläche 60 ausgehend -- jeweils ein in Draufsicht kreisförmiger Einsatzraum 78 eines Durchmessers von etwa 15 mm angeordnet; das Signalgehäuse 50 dient zur ventilnahen Aufnahme einer Babyzelle und einer Senderelektronik - beide Einsätze sind in der Zeichnung aus Gründen der Übersichtlichkeit vernachlässigt.

Das Signalgehäuse 50 wird in beschriebener Weise mittels der Hohlschraube 42 am Reifenventil 20 sowie damit am Felgenbett 22 festgelegt und kann sich -- vor allem dank der Kaverne 66 mit negativer Teilkugelfläche und ihres Partners, der Umfangsfläche 30 des Ventilkragens 28 -- auch Seitenwangen 16 verschiedener Wangenwinkel t anpassen.

Die beschriebene Aufhängung des Signalgehäuses 50 durch die -- bevorzugt aus vernickeltem Stahl bestehende -- Hohlschraube 42 bildet mit den beiden auf dem Felgenbett 12 ruhenden Fußleisten 62 eine betriebssichere Dreipunktbefestigung für jenes Signalgehäuse 50.

Bei Anlieferung der Bauteile sind der Ventilkörper 22 und die Elektronikeinheit durch die Hohlschraube 42 so vormontiert, dass die volle Beweglichkeit der Elektronikeinheit gewährleistet ist. Bei der Montage in das Rad wird das Reifenventil 20 durch das Felgenloch 18 gesteckt und die Überwurfmutter 32 bis zur Anlage an der Felge 10 mittels eines entsprechenden Werkzeuges festgeschraubt.

## Patentansprüche

1. Vorrichtung zum Messen des Reifendruckes in einem Luftreifen eines Fahrzeuges mittels eines vom Reifendruck beaufschlagten Messwertgebers am Felgenbett (12) einer ein Reifenventil (20) aufnehmenden Felge (10) für den Luftreifen, außerhalb dessen dem Messwertgeber ein Empfänger zugeordnet ist, wobei mit dem eine Überwurfmutter (32) aufweisenden Reifenventil (20) ein dem Felgenbett (12) zugeordnetes Elektronik- oder Signalgehäuse (50) mit Sockelleisten (62) verbunden ist, welches eine Senderelektronik als Messwertgeber für den Reifendruck enthält und an das Reifenventil (20) durch eine in die Ventilbohrung (28) eingreifende Hohlschraube (42) angeschlossen sowie diesem gegenüber einstellbar ist,
**dadurch gekennzeichnet,**
**dass** an der Innenseite (33) der Überwurfmutter (32) ein Vorsprung (34) als Sollbruchelement angebracht sowie die Sockelleisten (62) des Signalgehäuses (50) durch die Hohlschraube (42) an das Felgenbett (12) gedrückt ist.

2. Vorrichtung nach Anspruch 1, **dadurch gekennzeichnet, dass** der Vorsprung (34) einem Einbauteil an der Innenfläche (33) der Überwurfmutter (32) zugehört.

3. Vorrichtung nach Anspruch 1 oder 2, **dadurch gekennzeichnet, dass** der Vorsprung von einem an der Innenfläche (33) der Überwurfmutter (32) vorgesehenen Steg (34) ausgebildet ist.

4. Vorrichtung nach Anspruch 3, **dadurch gekennzeichnet, dass** der Vorsprung ein an der Innenfläche (33) der Überwurfmutter (32) umlaufender Steg (34) ist.

5. Vorrichtung nach einem der Ansprüche 1 bis 4, **gekennzeichnet durch** eine solche Ausgestaltung des Vorsprunges oder Steges (34), dass dieser bei Überschreitung eines vorbestimmten Drehmoments abscherbar ist.

6. Vorrichtung nach Anspruch 5, **gekennzeichnet durch** ein Drehmoment zwischen 3 Nm und 6 Nm.

7. Vorrichtung nach einem der Ansprüche 1 bis 6, **dadurch gekennzeichnet, dass** der Schraubenkopf (44) der Hohlschraube (42) zumindest teilweise einen polygonen Umfang aufweist und in Bereichen (46, 48) des Umfanges formschlüssig mit dem Signalgehäuse (50) verbindbar ist.

## Claims

1. Device for measuring the tyre pressure in a pneumatic tyre of a vehicle by means of a sensing device, charged with the tyre pressure, on the rim base (12) of a wheel rim (10) for the pneumatic tyre, accommodating a tyre valve (20), outside which pneumatic tyre a receiver is assigned to the sensing device, wherein connected by base strips (62) to the tyre valve (20), having a cap nut (32), is an electronics or signal housing (50), assigned to the rim base (12), said housing containing transmitting electronics as sensing device for the tyre pressure and being connected to the tyre valve (20) by a banjo bolt (42) engaging in the valve bore (28) and being adjustable in respect thereof,
**characterised in that**
on the inside (33) of the cap nut (32) is attached a projection (34) as nominal rupture element and the base strips (62) of the signal housing (50) are pressed to the rim base (12) by the banjo bolt (42).

2. Device according to claim 1, **characterised in that** the projection (34) belongs to a built-in part on the inner face (33) of the cap nut (32).

3. Device according to claim 1 or 2, **characterised in that** the projection is constructed of a web (34) provided on the inner face (33) of the cap nut (32).

4. Device according to claim 3, **characterised in that** the projection is a web (34) circulating on the inner face (33) of the cap nut (32).

5. Device according to one of claims 1 to 4, **characterised by** a configuration of the projection or web (34) of such a kind that it can shear off if a predetermined torque is exceeded.

6. Device according to claim 5, **characterised by** a torque of between 3Nm and 6Nm.

7. Device according to one of claims 1 to 6, **characterised in that** the bolt head (44) of the banjo bolt (42) has at least partially a polygonal circumference and can be positively connected to the signal housing (50) in areas (46, 48) of the circumference.

## Revendications

1. Dispositif pour mesurer la pression pneumatique dans un bandage pneumatique d'un véhicule, au moyen d'un transducteur de mesure actionné par la pression pneumatique au niveau de l'embase (12) d'une jante (10) comportant une valve de gonflage de pneu (20) pour le bandage pneumatique, à l'extérieur duquel un récepteur est associé au transducteur de mesure, un boîtier électronique ou de signal (50) pourvu de nervures de support (62) est associé à l'embase de jante (12) étant relié à la valve de gonflage (20) comportant un écrou d'accouplement (32), lequel boîtier contient un appareil électronique d'émission en tant que transducteur de mesure pour la pression pneumatique, et est raccordé à la valve de gonflage (20) par l'intermédiaire d'une vis creuse (42) pénétrant dans le trou de valve (28) et réglable par rapport à cette valve de gonflage,
**caractérisé en ce que**
- une saillie (34) est disposée sur la face interne (33) de l'écrou d'accouplement (32) en tant qu'élément destiné à la rupture, et les nervures de support (62) du boîtier de signal (50) sont appuyées sur l'embase de jante (12) par la vis creuse (42).

2. Dispositif selon la revendication 1, **caractérisé en ce que** la saillie (34) fait partie d'une pièce incorporée au niveau de la surface interne (33) de l'écrou d'accouplement (32).

3. Dispositif selon la revendication 1 ou la revendication 2, **caractérisé en ce que** la saillie est constituée d'une nervure (34) prévue sur la surface interne (33) de l'écrou d'accouplement (32).

4. Dispositif selon la revendication 3, **caractérisé en ce que** la saillie est une nervure périphérique (34) sur la surface interne (33) de l'écrou d'accouplement (32).

5. Dispositif selon l'une des revendications 1 à 4, **caractérisé par** une configuration de la saillie ou de la nervure (34) telle que cette dernière soit susceptible d'être cisaillée, en cas de dépassement d'un moment de torsion prédéterminé.

6. Dispositif selon la revendication 5, **caractérisé par** un moment de torsion compris entre 3 Nm et 6 Nm.

7. Dispositif selon l'une des revendications 1 à 6, **caractérisé en ce que** la tête de vis (44) de la vis creuse (42) présente au moins partiellement un pourtour polygonal, et est susceptible d'être reliée en conjugaison de forme avec le boîtier de signal (50) dans des zones (46, 48) du pourtour.
